# FASCICULE DE BREVET EUROPEEN

(11) **EP 1 656 328 B1**
(45) Date de publication et mention de la délivrance du brevet: **12.04.2017**
(21) Numéro de dépôt: 04767920.4
(22) Date de dépôt: 27.07.2004
(51) Int. Cl.: C03C 17/34, C03C 17/36, C23C 14/34

(54) **SUBSTRAT TRANSPARENT COMPORTANT UN REVETEMENT ANTI-SOLAIRE ET/OU BAS-EMISSIF**
TRANSPARENTES SUBSTRAT MIT NIEDRIGER EMISSIVITÄT ODER SONNENSCHUTZBESCHICHTUNG
TRANSPARENT SUBSTRATE COMPRISING AN ANTI-SOLAR AND/OR LOW-E COATING

(30) Priorité: 13.08.2003 FR 0309900
(43) Date de publication de la demande: 17.05.2006
(73) Titulaire: SAINT-GOBAIN GLASS FRANCE, 92400 Courbevoie (FR)
(72) Inventeur: FLEURY, Carinne, F-69003 Lyon (FR); NADAUD, Nicolas, F-94250 Gentilly (FR); BELLIOT, Sylvain, F-75012 Paris (FR)
(74) Mandataire: Saint-Gobain Recherche
(86) Numéro de dépôt international: PCT/FR2004/050359
(87) Numéro de publication internationale: WO 2005/016842

(56) Documents cités:
- EP-A- 0 546 302
- EP-A- 0 622 645
- US-A- 5 354 446
- US-A- 5 922 176
- US-B1- 6 472 072
- PATENT ABSTRACTS OF JAPAN vol. 017, no. 674 (C-1140), 10 décembre 1993 (1993-12-10) -& JP 05 221689 A (NIPPON SHEET GLASS CO LTD), 31 août 1993 (1993-08-31)

## Description

L'invention concerne un substrat transparent, notamment en verre, destiné à être incorporé dans un vitrage et muni, sur au moins une de ses faces, d'un revêtement du type anti-solaire et/ou bas émissif.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est alors préférable de munir les deux faces du substrat de ce type de revêtement.

Il y a beaucoup d'applications à ce type de produit : Il peut servir de vitrage dans le bâtiment, ou de vitrage dans les meubles de vente, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir.

Des exemples de revêtements antireflets sont décrits dans les brevets EP 0 728 712 et WO97/43224

La plupart des revêtements antireflets mis au point à ce jour ont été optimisés pour minimiser la réflexion lumineuse à incidence normale, sans prendre en compte l'aspect optique et l'esthétique du vitrage vu de façon oblique, la durabilité mécanique de l'empilement et la tenue du produit aux traitements thermiques (de type trempe, recuit, bombage). Il est ainsi connu qu'à Incidence normale, on peut obtenir des valeurs de réflexion lumineuse R_{L} très faibles avec des empilements à quatre couches avec une alternance couche à haut indice / couche à bas indice / couche à haut indice / couche à bas indice. Les couches à haut indice sont généralement en TiO₂ ou en Nb₂O₅ qui présentent effectivement un indice élevé, d'environ respectivement 2,45 et 2,35 et les couches à bas indice sont le plus souvent en SiO₂, d'indice environ 1,45

Lorsque l'on désire que l'empilement conserve ses propriétés optiques, mécaniques (dureté, résistance à la rayure, à l'abrasion), résistance chimique, lors de traitement thermique (bombage et/ou trempe), il est connu d'avoir recours en tant que couche à haut indice, à une couche à base de Si₃N₄ . Cependant, son indice de réfraction, à 550 nm, qui est sensiblement voisin de 2,0, limite les possibilités d'optimisation optique.

L'invention a alors pour but de remédier aux inconvénients ci-dessus, en cherchant à mettre au point un revêtement qui garantisse à la fois une bonne esthétique du vitrage et ce, quel que soit l'angle d'incidence, une durabilité mécanique et chimique élevées et une bonne tenue aux traitements thermiques (recuit, trempe, bombage, pliage), et ceci sans compromettre la faisabilité économique et/ou industrielle de sa fabrication.

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Au sens de l'invention, les couches en matériau diélectrique, sont notamment du type oxyde, nitrure ou d'oxynitrure de métaux comme cela sera détaillé ultérieurement. On n'exclut cependant pas qu'au moins l'une d'entre elles soit modifiée de façon à être au moins un peu conductrice, par exemple en dopant un oxyde métallique.

L'invention s'intéresse préférentiellement aux substrats verriers, mais s'applique aussi aux substrats transparents à base de polymère, par exemple en polycarbonate.

L'invention vise tout substrat muni d'au moins un empilement de couches minces, à fonctionnalité de contrôle solaire ou bas-émissive (Low E).

En effet, l'invention concerne les substrats transparents, de préférence rigides du type verre, qui sont munis d'empilements de couches minces comprenant au moins une couche métallique pouvant agir sur le rayonnement solaire et/ou le rayonnement infrarouge de grande longueur d'onde, en vue de constituer des vitrages.

L'invention s'intéresse aux empilements alternant des couches métalliques, notamment à base d'argent et des couches en matériau diélectrique du type oxyde métallique ou nitrure, permettant de conférer aux vitrages des propriétés de protection solaire ou de basse émissivité (double-vitrage de bâtiment, vitrages feuilletés de véhicule, ...). Elle s'intéresse plus particulièrement aux substrats verriers munis de tels empilements et qui doivent subir des opérations de transformation impliquant un traitement thermique à au moins 500°C : il peut notamment s'agir d'une trempe, d'un recuit ou d'un bombage.

Plutôt que de déposer les couches sur le verre après son traitement thermique (ce qui pose des problèmes technologiques importants), on a dans un premier temps, cherché à adapter les empilements de couches pour qu'ils puissent subir de tels traitements tout en gardant l'essentiel de leurs propriétés thermiques. Le but était donc d'éviter la détérioration des couches fonctionnelles, les couches d'argent notamment. Une solution, exposée dans le brevet EP-506 507, consiste à protéger les couches d'argent en les encadrant par des couches métalliques venant protéger les couches d'argent. On a alors un empilement bombable ou trempable, dans la mesure où il est au moins aussi performant dans la réflexion des infrarouges ou du rayonnement solaire avant qu'après le bombage ou la trempe. Cependant, l'oxydation / la modification des couches ayant protégé les couches d'argent sous l'effet de la chaleur conduisent à modifier sensiblement les propriétés optiques de l'empilement, notamment en induisant une augmentation de la transmission lumineuse et une modification de la colorimétrie en réflexion. Et ce chauffage tend également à créer des défauts optiques : des piqûres et/ou diverses altérations de petite taille conduisant à un niveau de flou significatif (on entend généralement par "altérations de petite taille" des défauts de taille inférieure à 5 micromètres, tandis que des "piqûres" s'entendent par des défauts de taille au-delà de 50 micromètres, notamment entre 50 et 100 micromètres, avec bien sûr la possibilité d'avoir également des défauts de taille intermédiaire, c'est-à-dire entre 5 et 50 micromètres).

Dans un second temps, on a alors cherché à mettre au point de tels empilements de couches minces qui soient capables de conserver à la fois leurs propriétés thermiques et leurs propriétés optiques après traitement thermique, en minimisant toute apparition de défauts optiques. L'enjeu était d'avoir ainsi des empilements de couches minces à performances optiques/thermiques fixes, qu'ils aient ou non à subir des traitements thermiques.

Une première solution a été proposée dans le brevet EP-847 965 : elle est davantage axée sur des empilements comprenant du type précédent (à deux couches d'argent), et décrit l'utilisation à la fois d'une couche-barrière au-dessus des couches d'argent et d'une couche absorbante ou stabilisante, adjacente auxdites couches d'argent et permettant de les stabiliser.

Elle décrit des empilements du type : Si₃N₄/ZnO/Ag/Ti/ZnO/Si₃N₄ ZnO/Ag/Ti/ZnO/Si₃N₄

Une deuxième solution a été proposée dans le brevet FR2827855. Elle préconise l'utilisation d'un empilement de couches minces comportant une alternance de n couches fonctionnelles A à propriétés de réflexion dans l'infrarouge et/ou dans le rayonnement solaire, notamment métalliques, et de n+1 revêtements B avec n ≥ 1. Lesdits revêtements B comportent une ou une superposition de couches en matériau diélectrique, de manière à ce que chaque couche fonctionnelle A soit disposée entre deux revêtements B. Le ou les couches fonctionnelles est (sont) à base d'argent, les couches-barrière à la diffusion de l'oxygène (les couches B) sont notamment à base de nitrure de silicium. Cet empilement présente en outre la particularité qu'au moins une des couches fonctionnelles A est directement en contact avec le revêtement diélectrique B disposé au-dessus d'elle, et est en contact avec le revêtement diélectrique B disposé au-dessous d'elles par l'intermédiaire d'une couche C absorbante au moins dans le visible, du type métallique éventuellement nitruré. Elle propose des empilements du type Si₃N₄/Ti/Ag/Si₃N₄ /Ag/Si₃N₄.

Ces solutions sont satisfaisantes dans la plupart des cas. Cependant, on a de plus en plus besoin d'avoir des verres aux galbes très prononcés et/ou de forme complexe (double courbure, courbure en forme de S ...). C'est tout particulièrement le cas des verres servant à faire des pare-brise automobiles ou des vitrines. Et dans ce cas, on impose aux verres des traitements localement différenciés, sur le plan thermique et/ou mécanique, comme cela est notamment décrit dans les brevets FR- 2 599 357, US-6 158 247, US-4 915 722 ou US-4 764 196. Cela est particulièrement sollicitant pour les empilements de couches minces : on peut alors avoir l'apparition de défauts optiques localisés, de légères variations d'aspect en réflexion d'un point à un autre du vitrage. La demande de brevet US 5,377,075 décrit des empilements comprenant une couche d'argent et une couche de nitrure de silicium, en combinaison avec un nitrure de Zr, Ti ou Hf.

L'un des buts de l'invention est de chercher à améliorer les performances énergétiques et optiques des empilements, tout en conservant leur comportement au traitement thermique (trempe, bombage, recuit).

Quel que soit le type d'empilement (bas émissif, anti-solaire), la sélection des critères a été délicate, car les inventeurs ont pris en compte la faisabilité industrielle du produit ainsi que l'obtention de propriétés optiques optimisées dans le domaine du visible ou dans le domaine de l'infra rouge, pour différentes valeurs d'angle d'incidence, et ceci sans compromettre les propriétés de durabilité mécanique et de résistance aux traitements thermiques de l'empilement.

Spécifiquement pour les empilements comportant des couches fonctionnelles devant assurer un contrôlé solaire, les inventeurs y sont parvenus, avec notamment l'amélioration des performances énergétiques, sans détériorer les performances dans le domaine de l'esthétique, de la durabilité tant mécanique que chimique, les empilements objet de l'invention étant de plus adaptés pour subir un traitement thermique (recuit, trempe, bombage)

Les deux caractéristiques les plus marquantes de l'invention sont les suivantes :
- Il a été découvert que contrairement au fait que le nitrure de zirconium soit particulièrement absorbant dans le domaine du visible, son caractère absorbant n'est plus prédominant lorsqu'il est présent au sein d'un nitrure mixte de silicium et zirconium (à condition cependant que sa teneur soit contrôlée) et qu'il fait bénéficier à ladite couche d'une augmentation substantielle de la valeur de son indice global de réfraction
- Il a également été montré que l'utilisation de matériaux mixtes à base de Si₃N₄ permettait d'obtenir des empilements possédant des propriétés de résistance mécanique (résistance à l'abrasion, aux rayures, au nettoyage) et de résistance aux traitements thermiques (recuit, trempe, bombage) des empilements, non dégradées par rapport à celles d'empilements à base de Si₃N₄ pur.

Un procédé de fabrication des substrats verriers à revêtement selon l'invention consiste à déposer l'ensemble des couches, successivement les unes après les autres, par une technique sous vide, notamment par pulvérisation cathodique assistée par champ magnétique ou par décharge couronne. Ainsi, on peut déposer les couches d'oxyde par pulvérisation réactive du métal en question en présence d'oxygène et les couches en nitrure en présence d'azote. Pour faire du SiO₂ ou du Si₃N₄, :Zr on peut partir d'une cible en silicium, d'une cible en zirconium que l'on dope légèrement avec un métal comme l'aluminium pour la rendre suffisamment conductrice.

Une cible de pulvérisation magnétron, plane ou tubulaire, permet l'obtention d'au moins une couche comprenant du SiₓZr_{y}Al_{z} qui se caractérise en ce que le rapport Si/Zr au niveau de la cible est légèrement différent de celui de la couche selon un écart de 0,1 à 0,5.

Cette cible peut être obtenue à partir d'un procédé de plasma spray, par un procédé de pressage, frittage (HIP « Hot Isostatic Pressure » , CIP « Cold Isostatic Pressure »d'un mélange de poudres d'aluminium, de zirconium, de silicium.

Les applications de ces vitrages, dont la plupart ont déjà été évoquées sont : vitrine, présentoir, comptoir de magasin, vitrages pour le bâtiment, pour tout dispositif d'affichage comme les écrans d'ordinateur, la télévision, tout mobilier verrier, tout verre décoratif, les toits pour automobile. Ces vitrages peuvent être bombés/trempés après dépôt des couches.

Les détails et caractéristiques avantageuses de l'invention vont maintenant ressortir des exemples suivants non limitatifs, à l'aide des figures :
La figure 1 est un substrat muni sur une de ses deux faces d'un empilement antireflet à quatre couches,
La figure 2 est un substrat muni sur chacune de ses faces d'un empilement antireflet à quatre couches.

Tous les exemples 1 à 4 concernent des empilements antireflets à quatre couches. Les couches ont toutes été déposées de façon conventionnelle par pulvérisation cathodique assistée par champ magnétique et réactive, en atmosphère oxydante à partir de cible de Si ou de métal pour faire des couchés en SiO2 ou en oxyde métallique, à partir de cible de Si ou de métal en atmosphère nitrurante pour faire des nitrures, et dans une atmosphère mixte oxydante/nttrurante pour faire les oxynitrures. Les cibles en Si peuvent contenir un autre métal en faible quantité, notamment Zr, Al, notamment afin de les rendre plus conductrices.

On donne ci-après des compositions de couches Si₃N₄ dopées au zirconium, ayant été utilisées dans les exemples ci-après

| Type de dopage | Indice de réfraction et absorption | Si/Zr (atomique) |
|---|---|---|
| Si₃N₄ :Zr | N=2,20 abs=1% | 5.0 |
| Si₃N₄:Zr | N=2,25; abs=1.5% | 4.60 |

### |Exemple 1 (hors invention)

| | | |
|---|---|---|
| (6) : | Verre | |
| (1) : | Si₃N₄ | indice n1 = 2 |
| (2) : | SiO₂ | indice n2 = 1,46 |
| (3) : | Si₃N₄:Zr | indice n3 = 2,2 |
| (4) : | SiO₂ | indice n4 = 1,46 |

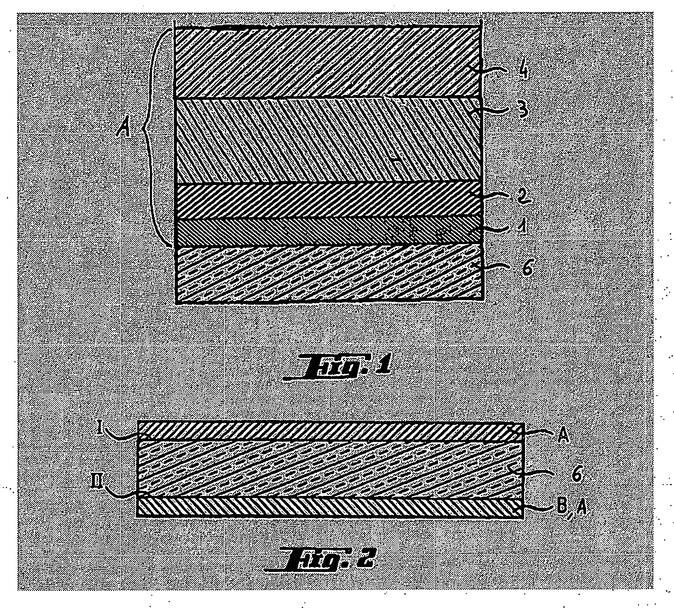

Il s'agit du verre 6 de la figure 1. Le verre est un verre clair silico-sodo-calcique de 4 mm d'épaisseur, commercialisé sous le nom de Planilux par Saint-Gobain Vitrage.

Ce verre constitue un vitrage monolithique et il est muni sur ses deux faces d'un empilement antireflet.
*SiO₂*/*Si₃N₄ :Zr*/*SiO₂*/*Si₃N₄*/*verre*/*Si₃N₄*/*SiO₂*/*Si₃N₄ :Zr*/*SiO₂ (une couche* de *Si₃N₄ :Zr)*

Le tableau ci-dessous résumé l'indice nᵢ et l'épaisseur géométrique eᵢ en nanomètres de chacune des couches :

| EXEMPLE 1 | COUCHE (1) | COUCHE (2) | COUCHE (3) | COUCHE (4) |
|---|---|---|---|---|
| nᵢ | 2 | 1,46 | 2,2 | 1,46 |
| Eₗ | 20 nm | 35 nm | 117 nm | 85 nm |

Le tableau suivant donne les paramètres optiques, dans le diagramme (L,a*,b*) pour divers angles d'incidence.

| Empilement | Θ=0° | Θ=10° | Θ=20° | Θ=30° | Θ=40° | Θ=50° | Θ=60° | Θ=70° | entre Θ=0° et Θ=70° |
|---|---|---|---|---|---|---|---|---|---|
| Exemple 1 | a*=-3 | a*=-3 | a*=1 | a*=4 | a*=5 | a*=4 | a*=3 | a*=2 | Δa*=8 |
| | b*=-10 | b*=-10 | b*=-9 | b*=-7 | b*=-3 | b*=-0,5 | b*=0,5 | b*=0,8 | Δb*=11 |

Cet empilement est particulièrement adapté pour une application relevant du bâtiment, pour laquelle la couleur en réflexion est neutre (voisine du gris, du bleu), la réflexion lumineuse est très sensiblement Inférieure à 2 % , les valeurs de a*,b* sont sensiblement inférieures en valeur absolue à 10, et cette neutralité de couleur en réflexion est conservée entre 0° et 70° d'angle d'incidence.

### Exemple 2 (hors invention)

| | | |
|---|---|---|
| (6): | Verre | |
| (1): | Si₃N₄:Zr | indice n1 = 2,2 |
| (2): | SiO₂ | indice n2 = 1,46 |
| (3): | Si₃N₄:Zr | indice n3 = 2,2 |
| (4): | SiO₂ | indice n4 = 1,48 |

Il s'agit du verre 6 de la figure 1 muni sur ses deux faces d'un empilement antireflet du type.
*SiO₂*/*Si₃N₄ :Zr*/*SiO₂*/*Si₃N₄ :Zr*/*verre*/*Si₃N₄ :Zr*/*SiO₂*/*Si₃N₄ :Zr*/*SiO₂*

Le tableau ci-dessous résume l'indice nᵢ et l'épaisseur géométrique eᵢ en nanomètres de chacune des couches :

| EXEMPLE 2 | COUCHE (1) | COUCHE (2) | COUCHE (3) | COUCHE (4) |
|---|---|---|---|---|
| nᵢ | 2,2 | 1,46 | 2,2 | 1,46 |
| eᵢ | 15 nm | 18 nm | 98 nm | 86 nm |

Le tableau suivant donne les paramètres optiques, dans le diagramme (L,a*,b*) pour divers angles d'incidence

| Empilement | Θ=0° | Θ=10° | Θ=20° | Θ=30° | Θ=40° | Θ=50° | Θ=60° | Θ=70° | entre Θ=0° et Θ=70° |
|---|---|---|---|---|---|---|---|---|---|
| Exemple 2 | A*=-5 | a*=-5 | a*=-6 | A*=-4 | a*=1,5 | a*=6,5 | a*=7,5 | a*=6 | Aa*=13 |
| | B*=-5 | b*=4 | b*=-1 | b*=1 | b*=-0,5 | b*=-3 | b*=-3 | b*=-2 | Δb*=6 |

Cet empilement est particulièrement adapté pour une application relevant du bâtiment, pour laquelle la couleur en réflexion est neutre (voisine du gris, du bleu), la réflexion lumineuse est très sensiblement inférieure à 2 %, les valeurs de a*,b* sont sensiblement inférieures en valeur absolue à 10, et cette couleur neutre en réflexion est conservée entre 0° et 70° d'angle d'incidence.

Les exemples 1 et 2 sont à comparer avec des empilements connus de l'art antérieur faisant l'objet des exemples 3 et 4.

### Exemples 3 et 4 (hors invention)

| | | |
|---|---|---|
| (6) : | Verre | |
| (1) : | Si₃N₄ | indice n1 = 2.0 |
| (2) : | SiO₂ | indice n2 = 1,46 |
| (3) : | Si₃N₄ | indice n3 = 2.0 |
| (4) : | SiO₂ | indice n4 = 1,46 |

Il s'agit du verre 6 de la figure 1. Le verre est un verre clair silico-sodo-calcique de 4 mm d'épaisseur, commercialisé sous le nom de Planilux par Saint-Gobain Vitrage.

Ce verre est muni sur ses deux faces de l'empilement antireflet.
*SiO₂*/*Si₃N₄*/*SiO₂*/*Si₃N₄*/*verre*/*Si₃N₄*/*SiO₂*/*Si₃N₄*/*SiO₂*

Le tableau ci-dessous résume l'indice nᵢ et l'épaisseur géométrique eᵢ en nanomètres de chacune des couches :

| EXEMPLE 3 | COUCHE (1) | COUCHE (2) | COUCHE (3) | COUCHE (4) |
|---|---|---|---|---|
| nᵢ | 2,0 | 1,46 | 2,0 | 1,46 |
| eᵢ | 18 nm | 28 nm | 102 nm | 90 nm |

| EXEMPLE 4 | COUCHE (1) | COUCHE (2) | COUCHE (3) | COUCHE (4) |
|---|---|---|---|---|
| nᵢ | 2,0 | 1,46 | 2,0 | 1,46 |
| eᵢ | 35 nm | 19 nm | 50 nm | 90 nm |

Le tableau suivant donne les paramètres optiques, dans le diagramme (L,a*,b*) pour divers angles d'incidence

| Empilements | Θ=0° | Θ=10° | Θ=20° | Θ=30° | Θ=40° | Θ=50° | Θ=60° | Θ=70° | entre Θ=0° et Θ=70° |
|---|---|---|---|---|---|---|---|---|---|
| Exemple 3 | a*=2 | a*=2 | a*=2 | a*=5 | a*=7 | a*=8 | a*=8 | a*=6 | Δa*=6 |
| | b*=-25 | b*=-25 | b*=-20 | b*=-15 | b*=-10 | b*=-7 | b*=-5 | b*=-3 | Δb*=22 |
| Exemple 4 | a*=-5 | a*=-5 | a*=-0,6 | a*=6,5 | a*=12 | a*=13 | a*=10 | a*=6.5 | Δa*=18 |
| | b*=-5 | b*=-5 | b*=-4 | b*=-4 | b*=-2 | b*=0,6 | b*=2 | b*=2 | Δb*=7 |

L'empilément de l'exemple 3 est également adapté pour application relevant du bâtiment, mais pour un angle d'incidence variant entre 0° et 70 °, la couleur en réflexion exprimée dans le diagramme (L, a*, b*) demeure dans le rouge, violet. Cette couleur n'est pas recommandée pour de telles applications et jugée inesthétique. Les propriétés optiques demeurent constantes entre 0° et 70° d'angle d'incidence, mais ne correspondent pas aux normes esthétiques jugées acceptables dans le domaine du bâtiment.

L'empilement de l'exemple 4 voit sa couleur en réflexion passée du gris (pour 0° d'angle d'incidence), puis au bleue (pour 30 à 40 ° d'angle d'incidence) et enfin au rouge pour 70° d'angle d'incidence.

Dans cet exemple, les propriétés optiques ne sont pas conservées.

En conclusion, le dopage en zirconium de l'une au moins des couches à haut indice (Si₃N₄) permet d'éviter de très forte modification de la couleur en réflexion lors de la variation de l'angle d'incidence.

De plus les empilements des exemples 1 et 2 peuvent subir des traitements thermiques sans altération des propriétés optiques.

On rappelle ci-après la structure de l'empilement en question

### Exemple 5 (hors invention)

| | | |
|---|---|---|
| (6) : | Verre | |
| (1) : | Si₃N₄:Zr | indice n1 = 2,2 |
| (2) : | SiO₂ | indice n2 = 1,46 |
| (3) : | Si₃N₄:Zr | indice n3 = 2,2 |
| (4) : | SiO₂ | indice n4 = 1,46 |

Il s'agit du verre 6 de la figure 1 muni sur ses deux faces d'un empilement antireflet du type.
*SiO₂*/*Si₃N₄*:*Zr*/*SiO₂*/*Si₃N₄ :Zr*/*verre*/*Si₃N₄ :Zr*/*SiO₂*/*Si₃N₄ :Zr*/*SiO₂*

Les épaisseurs géométriques sont les suivantes :

| EXEMPLE 5 | COUCHE (1) | COUCHE (2) | COUCHE (3) | COUCHE (4) |
|---|---|---|---|---|
| nᵢ | 2,2 | 1,46 | 2,2 | 1,46 |
| eᵢ | 15 nm | 18 nm | 98 nm | 86 nm |

Cet empilement (qui est identique à l'empilement antireflet faisant l'objet de l'exemple 2) est soumis à un traitement thermique de type recuit.
Ces propriétés entre avant recuit et après recuit ne sont pas substantiellement modifiées, altérées, comme le prouve le tableau ci-après qui montre l'évolution de la couleur dans le diagramme (L,a*,b*).

| Empilement | Θ=0° | Θ=10° | Θ=20° | Θ=30° | Θ=40° | Θ=50° | Θ=60° | Θ=70° |
|---|---|---|---|---|---|---|---|---|
| Exemple 2 | A*=-4.8 | a*=-5.4 | a*=-6 | a*=-4.5 | a*=1,5 | a*=6,4 | A*=7.5 | a*=5.9 |
| | b*=-4.9 | b*=-3.6 | b*=-0.8 | b*=1.0 | b*=-0,5 | b*=-2.7 | b*=-3.2 | b*=-2.3 |
| Exemple 5 | A*=-7.4 | a*=-7.6 | a*=7.4 | a*=-4.6 | a*=2.6 | a*=7.5 | a*=8.2 | a*=6.1 |
| | B*=-2.2 | b*=-1.4 | b*=0.4 | b*=1.0 | b*=-0,9 | b*=-2.6 | b*=-2.6 | b*=-1.6 |

Les empilements faisant l'objet des exemples suivants 6 et 7 sont du type contrôle solaire, particulièrement conçus pour des applications relevant de l'automobile.

La conjugaison de la bonne qualité optique et des évolutions optiques limitées au bombage sont obtenues par le choix judicieux des couches métalliques différentes.
La première couche de matériau diélectrique (a) comporte une couche barrière à la diffusion de l'oxygène. Cette couche comprend des nitrures mixtes de silicium et de zirconium, renfermant éventuellement au moins un autre métal tel que l'aluminium. Elle peut comporter une couche à base d'oxyde de zinc ou d'oxyde mixte de zinc et d'un autre métal, sous stoechiométrique en oxygène

Cette couche diélectrique a essentiellement pour fonction de bloquer la diffusion de l'oxygène vers l'intérieur de l'empilement, y compris à haute température. Le nitrure mixte étant largement inerte face à une attaque oxydante, il ne subit aucune modification chimique (du type oxydation) ou structurelle notable lors d'un traitement thermique du type trempe. Il n'entraîne donc quasiment aucune modification optique de l'empilement en cas de traitement thermique, notamment en terme de niveau de transmission lumineuse. Cette couche peut aussi faire office de barrière à la diffusion d'espèces migrant du verre, des alcalins notamment. En outre, grâce à son indice de réfraction voisin de 2,2 il prend aisément place dans un empilement de couches du type contrôle solaire

Cette couche peut généralement être déposée selon une épaisseur d'au moins 10 nm, par exemple comprise entre 15 et 70 nm.

Comme nous l'avons vu précédent, cette première couche diélectrique peut être revêtue d'une couche d'un autre matériau diélectrique comme l'oxyde de zinc (ZnO) et selon une épaisseur comprise entre 5 et 15 nm.

Une couche métallique inférieure (b) faisant office de « bloqueur » peut être constituée d'un métal X choisi parmi le titane, le nickel, le chrome, le niobium, le zirconium, ou d'un alliage métallique contenant au moins l'un de ces métaux.

L'épaisseur de la couche (b) est avantageusement choisie à une valeur suffisante pour que la couche métallique ne s'oxyde que partiellement au cours d'un traitement thermique tel que la trempe. De préférence, cette épaisseur est inférieure ou égale 6 nm, comprise entre 0,2 et 6 nm, de préférence d'au moins 0,4 nm ou d'au moins 1 nm, suivant les séquences d'empilement envisagées.

Un métal inférieur choisi parmi les métaux avides d'oxygène permet de limiter la diffusion d'oxygène résiduel à travers la couche fonctionnelle et contribue à éviter l'apparition de défauts de type flou ou piqûres. Le métal inférieur s'oxydant peu pendant le traitement thermique, son épaisseur est avantageusement choisie de telle façon qu'il ne contribue pas à l'absorption lumineuse après traitement thermique.

La couche fonctionnelle (c) est typiquement une couche en argent, mais l'invention s'applique de façon identique à d'autres couches métalliques réfléchissantes, comme des alliages d'argent, contenant notamment du titane ou du palladium, ou des couches à base d'or ou de cuivre. Son épaisseur est notamment de 5 à 20 nm, de préférence de l'ordre de 7 à 15 nm.

En variante, une couche métallique supérieure (d) (jouant le rôle de surbloqueur) peut être constituée d'un métal Y choisi parmi le titane, le nickel, le chrome, le niobium, le zirconium, et les alliages métalliques contenant au moins l'un de ces métaux , différent du métal ou alliage X de la couche (b). De manière avantageuse, le métal Y est choisi parmi le titane, le niobium et le zirconium ; il s'agit préférentiellement de titane.

L'épaisseur de la couche (d) est avantageusement choisie à une valeur suffisante pour que la couche métallique ne s'oxyde que partiellement au cours d'un traitement thermique tel que la trempe. De préférence, cette épaisseur est inférieure ou égale 6 nm, comprise entre 0.2 et 6 nm, de préférence d'au moins 0.4 nm ou d'au moins 1 nm en fonction des séquences d'empilement envisagées.

Un métal supérieur choisi parmi les métaux avides d'oxygène permet en outre, de bloquer la diffusion de l'oxygène à travers l'empilement et donc de protéger efficacement la couche fonctionnelle d'argent. Cette oxydation du métal supérieur entraîne cependant une évolution de la transmission lumineuse et l'épaisseur maximale de la couche métallique supérieure (d) peut être choisie de façon à limiter le ΔT_{L}.

Selon une variante de réalisation, la couche fonctionnelle (c) typiquement en argent est directement en contact avec les revêtements métalliques (b) ou (d) disposés au-dessous ou au-dessus d'elle, (b) ou (d) étant à base d'oxyde de zinc ou d'un oxyde mixte de zinc et d'un autre métal.

Selon les modes de réalisation précédemment décrits, les couches (b) et (d) ne sont pas simultanément présentes dans l'empilement, soit on incorpore la couche (b) en dessous de la couche fonctionnelle (c) (la couche (d) est absente), soit on incorpore la couche (d) au dessus de la couche fonctionnelle (c) et dans ce cas, la couche (b) est omise.

Selon une autre variante de réalisation, au contraire les couches (b) et (d) sont présentes simultanément.

La deuxième couche de matériau diélectrique (e) contenant éventuellement du zirconium a une fonction similaire à la couche (a). Elle comporte en outre une couche barrière à la diffusion de l'oxygène choisie parmi les nitrures mixtes de silicium et zirconium. renfermant éventuellement au moins un autre métal tel que l'aluminium.(De même que la couche (a), la couche (e) peut être complétée par une autre couche à base d'un autre diélectrique du type ZnO, comme par exemple l'oxyde de zinc, et selon une épaisseur comprise entre 5 et 20 nm (ZnO/Si₃N₄ :Zr).

Selon l'invention, au moins l'une des couches diélectriques est à base d'un nitrure mixte de silicium et de zirconium selon la revendication 1.

Cette couche (e) peut généralement être déposée selon une épaisseur d'au moins 10 nm, par exemple comprise entre 15 et 70 nm. Elle peut notamment avoir une épaisseur supérieure à celle de la première couche diélectrique (a).

Bien entendu, dans le cadre de l'invention, il est possible de concevoir des empilements incorporant au moins deux, voire trois séquences d'empilement standard tel que décrit précédemment. Bien entendu, les épaisseurs seront adaptées en conséquence afin de conserver les performances optiques et énergétiques.

Ainsi, on peut par exemple avoir les empilements suivants
- (a)/ZnO par exemple /X/Ag par exemple /ZnO par exemple/(e)
- (a)/ZnO par exemple /Ag par exemple /Y/ZnO par exemple/(e)
- (a)/ZnO par exemple /X/Ag par exemple /Y/ZnO par exemple/(e)
- (a)/ZnO par exemple /X/Ag par exemple /ZnO par exemple/(e)/ZnO par exemple /X/Ag par exemple /ZnO par exemple/(e)
- (a)/ZnO par exemple /Ag par exemple /ZnO par exemple/(e)/ZnO par exemple /Ag par exemple /ZnO par exemple/(e)
- (a)/ZnO par exemple /Ag par exemple /ZnO par exemple/(e)/ZnO par exemple /Ag par exemple /ZnO par exemple/(e)/ZnO par exemple /Ag par exemple /ZnO par exemple/(e)
- ainsi que des combinaisons des séquences précédentes

Pour les épaisseurs, on donne à titre d'exemple pour un monocouche fonctionnelle (c'est-à-dire une seule couche fonctionnelle c)
Epaisseur de la couche (a) est égale sensiblement à l'épaisseur de la couche (e), et est comprise entre 10 à 40 nm
Pour un bicouche (c'est-à-dire deux couches fonctionnelles c)
Epaisseur de la couche (a) est égale sensiblement à l'épaisseur de la couche (e), et est comprise entre 10 à 40 nm, et la couche intermédiaire (a' ou e') dispose d'une épaisseur comprise entre 5 à 70 nm.

Pour un tri-couche (c'est-à-dire trois couches fonctionnelles c)
Epaisseur de la couche (a) est égale sensiblement à l'épaisseur de la couche (e), et est comprise entre 10 à 40 nm, et les couches intermédiaires (a', et a" ou e' et e") disposent d'une épaisseur comprise entre 5 à 70 nm.
Avantageusement, au moins un des revêtements diélectriques peut comprendre une couche à base d'oxyde(s) métallique(s). Notamment, la couche diélectrique, supérieure (e) peut comprendre à sa surface extérieure une couche (f) sous/sur stoechiométrique en oxygène et/ou nitruré, améliorant la résistance à la rayure de l'empilement, conformant ainsi une couche dite d'overcoat. Il peut s'agir d'une couche à base d'oxyde de zinc ou d'un oxyde mixte de zinc et d'un autre métal (du type Al). Il peut aussi s'agir d'oxydes comprenant au moins un des métaux suivants : Al, Ti, Sn, Zr, Nb, W, Ta. Un exemple d'oxyde mixte de zinc susceptible d'être déposé en couche mince selon l'invention est un oxyde mixte de zinc et d'étain contenant un élément additionnel tel que de l'antimoine, tel que décrit dans WO 00/24686. L'épaisseur de cette couche d'oxyde peut être de 0,5 à 7 nm.

Selon une autre variante, la dernière couche peut être du type DLC. Avec ce type d'empilement, il est possible, tout en conservant les propriétés optiques, d'améliorer le gain énergétique, ou les deux à la fois.

Cette amélioration sera optimisée selon les applications visées en choisissant judicieusement de substituer aux couches (a) ou (e) ou les deux simultanément le nitrure de silicium par du nitrure mixte de silicium et de zirconium, éventuellement incorporant un autre métal (aluminium par exemple)

| Exemple 6 | X | ZnO | Ag | ZnO | X | Ag | X | T_{L}(%) | R_{L}(%) | a*(R) | b*(R) | R_{E}(%) |
|---|---|---|---|---|---|---|---|---|---|---|---|---|
| X=Si₃N₄ : Al* N=2.0 | 25 | 10 | 8.5 | 10 | 69.6 | 9.9 | 29 | 76.4 | 10.7 | -5.1 | -2.2 | 29.8 |
| Si₃N₄ : Zr:Al N=2.2 | 23 | 10 | 9.4 | 10 | 67.5 | 11.5 | 28 | 76.2 | 10.6 | -5.0 | -2.6 | 31.6 |

| | | | | | | | | | | | | |
|---|---|---|---|---|---|---|---|---|---|---|---|---|
| *Référence | | | | | | | | | | | | |

| Exemple 7 | X | Ag | X | Ag | X | T_{L}(%) | R_{L}(%) | a*(R) | b*(R) | R_{E}(%) |
|---|---|---|---|---|---|---|---|---|---|---|
| X=Si₃N₄:Al* N=2.0 | 25 | 9.3 | 65.3 | 11 | 29.5 | 76.0 | 9.7 | -2.0 | -5.1 | 33.0 |
| X=Si₃N₄ :Zr :Al N=2.2 | 24 | 10.3 | 63.5 | 12.5 | 28 | 76.0 | 9.6 | -2.1 | -5.2 | 35.1 |

| | | | | | | | | | | |
|---|---|---|---|---|---|---|---|---|---|---|
| *Référence | | | | | | | | | | |

Le gain énergétique se traduit par une augmentation d'environ 10 % de l'épaisseur totale d'argent et une augmentation d'environ 1.5 % en R_{E}. Les paramètres optiques a*, b*, T_{L} (%),R_{L}(%) demeurent inchangés.

L'exemple 8 est un exemple d'empilement de type isolation thermique renforcée (Low E) à facteur solaire bas.

On compare les propriétés optiques a*, b*, T_{L} (%),R_{L}(%), Te (%) d'un vitrage comportant ce type d'empilement avec celui incorporant les modalités de l'invention.

Le vitrage en question est un vitrage commercialisé par la demanderesse sous la marque Planistar.
Les paramètres optiques sont les suivants : (simulations Filmstar) :

| | | |
|---|---|---|
| T_{L} = 69,9 % ; | Rₑₓₜ = 10,5 % | T_{E} = 38,2 % |
| L* = 82,6 | L* = 38,8 % | |
| a* = -5,0 | a* = -2,2 | |
| b* = 2,7 | b* = -2,1 | |

Les paramètres optiques deviennent lorsqu'on utilise au sein de l'empilement Si₃N₄ :Zr (simulations Filmstar) :

### Exemple 8

| | | |
|---|---|---|
| T_{L} = 70,2 % ; | Rₑₓₜ = 10,0 % | T_{E} = 37,0 % |
| L* = 83,0 | L* = 38,1 % | |
| a* = -4,1 | a* = -2,1 | |
| b* = 1,2 | b* = -1,8 | |

En conclusion, on remarque que l'utilisation du nitrure de silicium dopé Zr permet d'améliorer les performances anti-solaire du produit (un peu plus de 1% sur la T_{E} ou le facteur solaire) grâce à une augmentation de l'épaisseur d'argent) tout en baissant le niveau de réflexion du produit (-0,5 %).

Les exemples 9 et 10 illustrent une variante dans laquelle on prévoit, tout en conservant les propriétés optiques, d'améliorer la résistance mécanique (résistance à la rayure, aux agressions mécaniques et chimiques).

Cet exemple reprend l'empilement faisant l'objet de l'exemple 2 (antireflet) et on ajoute une sur-couche de protection en DLC.

### Exemples 9 et 10 (hors invention)

| | | |
|---|---|---|
| (6): | Verre | |
| (1): | Si₃N₄:Zr | indice n1 = 2,2 |
| (2): | SiO₂ | indice n2 = 1,46 |
| (3): | Si₃N₄:Zr | indice n3 = 2,2 |
| (4): | SiO₂ | indice n4 = 1,46 |
| (5): | DLC | indice n5 = 1,85 |

Il s'agit du verre 6 de la figure 1 muni sur ses deux faces d'un empilement antireflet du type.
*DLC*/ *SiO₂*/ *Si₃N₄ :Zr*/ *SiO₂*/ *Si₃N₄ :Zr*/*verre*/*Si₃N₄ :Zr*/*SiO₂*/*Si₃N₄ :Zr*/*SiO₂*/*DLC*

Le tableau ci-dessous résume l'indice nᵢ et l'épaisseur géométrique eᵢ en nanomètres de chacune des couches :

| EXEMPLE 9 | Couche (1) | Couche (2) | Couche (3) | Couche (4) | Couche (5) |
|---|---|---|---|---|---|
| nᵢ | 2,2 | 1,46 | 2,2 | 1,46 | 1.85 |
| eᵢ | 14 nm | 19 nm | 98 nm | 78 nm | 5 nm |

| EXEMPLE 10 | Couche (1) | Couche (2) | Couche (3) | Couche (4) | Couche (5) |
|---|---|---|---|---|---|
| nᵢ | 2,2 | 1,46 | 2,2 | 1,46 | 1.85 |
| eᵢ | 17 nm | 18 nm | 98 nm | 70 nm | 10 nm |

Pour ces exemples 9 et 10, on donne ci-après les propriétés optiques comparées à celles de référence constituées par l'exemple 2

| | TL (%) | RL (%) | A(%) |
|---|---|---|---|
| Exemple 2 | 98.6 | 0.6 | 0.8 |
| Exemple 9 | 98.4 | 0.6 | 1.6 |
| Exemple 10 | 98.1 | 0.65 | 1.3 |

Après test TABER, après 650 tours, à 500g, meules CS-10F, on a constaté sensiblement entre 1 à 4% de flou.

On donne ci-après au niveau de l'exemple 11 un empilement de type contrôle solaire.
*Empilement de type : v* / *Si₃N₄:Zr* / *ZnO* / *NiCr* / *Ag* / *ZnO* / *Si3N4:Zr* / *SnZnOx*

Les épaisseurs d'Ag, de ZnO, de sous-bloqueur NiCr et d'overcoat SnZnOx sont constantes.

| Type | R_{/carré} | Emissivité | Transmission | | | | | Réflexion côté couche | | | | |
|---|---|---|---|---|---|---|---|---|---|---|---|---|
| | | Eₙ / E_{eff} | TL | l* | a* | b* | ΔE | R_{L} | l* | a* | b* | ΔE |
| Références avec Si3N4 : Al | 6,5 | 6,3 / 7,4 | 87 | 94,8 | -2,9 | 0,3 | 2,0 | 4,6 | 25,4 | 7,3 | -0,5 | 3,2 |
| empilement avec Si3N4 : Zr :Al | 5,7 | 5,8 / 6,8 | 87,4 | 94,9 | -2,3 | 0,4 | 1,7 | 4,4 | 25,1 | 4 | -2,4 | 2,9 |
| | 5,6 | 5,8 / 6,8 | 87 | 94,8 | -2,5 | 0,2 | 1,9 | 4,9 | 26,4 | 5,7 | 0,5 | 3,2 |

On peut noter que la valeur de a* diminue pour le nitrure de silicium incorporant le zirconium, de même on remarque une diminution de la valeur de R carré de 6,5 à 5,6 Ohm ainsi qu'une baisse de l'émissivité normale.

On donne ci-après avec l'exemple 12 une structure d'empilement de contrôle pour solaire pour l'automobile bi-couche à l'argent :
Intérieur/Verre/Si₃N₄:Zr/ZnO/Ag/ZnO/ Si₃N₄:Zr /ZnO/Ag/ZnO/ Si₃N₄:Zr/PVB/verre/extérieur

| | T_{L} (%) | T_{E} (%) | R_{L} (%) | R_{E} (%) | a*(Rₑₓₜ) | b*(Rₑₓₜ) | R_{□} |
|---|---|---|---|---|---|---|---|
| | (A 2°) | | (D65 2°) | | | | (Ohm) |
| Si₃N₄:Al* | 76.6 | 47.2 | 11.7 | 29.4 | -4.8 | -2.9 | 3.4 |
| Si₃N₄:(Al,Zr) | 79.4 | 48.2 | 10.7 | 31.1 | -4.8 | -2.2 | 2.5 |

| | | | | | | | |
|---|---|---|---|---|---|---|---|
| * référence | | | | | | | |

On remarque là encore une diminution de la R carré pour des propriétés optiques sensiblement identiques.

On donne ci-après avec l'exemple 13 une structure d'empilement de contrôle pour solaire pour l'automobile tri-couche à l'argent (vitrage chauffant):
Intérieur/verre / Si₃N₄:(Al,Zr) / ZnO / Ag / Ti / ZnO / Si₃N₄:(Al,Zr) / ZnO / Ag / Ti / ZnO / Si₃N₄:(Al,Zr) / ZnO / Ag / Ti / Zn / Si₃N₄:(Al,Zr)/PVB/verre%xtérieur

| | T_{L} (%) (A, 2°) | T_{E} (%) | R_{L} (%) (D65, 2°) | R_{E} (%) | a*(Rₑₓₜ) | b*(Rₑₓₜ) | R_{□} (Ohm) |
|---|---|---|---|---|---|---|---|
| Si₃N₄:Al reference | 68.0 | 29.6 | 11.5 | 45.1 | -5.2 | 9.1 | 1.13 |
| Si₃N₄:(Al,Zr) Neutre | 70,8 | 32,1 | 12,4 | 43,5 | -2,6 | -2,15 | 0.99 |
| Si₃N₄:(Al,Zr) Vert | 70,4 | 31,8 | 12,0 | 43,5 | -5,4 | -0,9 | 1,03 |
| Si₃N₄:(Al,Zr) Vert/jaune | 70,5 | 31,4 | 11,5 | 43,8 | -7,65 | +3,7 | 1,00 |

On remarque là encore une diminution de la R carré pour les empilements incorporant du nitrure de silicium dopé au zirconium. (de 1.13 à sensiblement 1.00) La transmission lumineuse est également plus élevée et les couleurs sont plus esthétiques (en réflexion côté extérieur)

Et enfin avec ce dernier exemple 14, il s'agit d'une structure d'empilement à quatre couches fonctionnelles en argent.

| | TE | TL(ill.A) | a*(ill.a) | b*(ill.A) | RE | RL | a* | b* | Rcarré (Ohm) |
|---|---|---|---|---|---|---|---|---|---|
| Si:Al* | **31,2** | **69,7** | **-7,0** | **-3,1** | **40,5** | **8,2** | **-1,8** | **-2,4** | **1.04** |
| Si:Al,Zr | **32,7** | **70,7** | **-4,8** | **0,5** | **38,9** | **8,4** | **-2,4** | **-5,5** | **1.01** |

| | | | | | | | | | |
|---|---|---|---|---|---|---|---|---|---|
| *référence | | | | | | | | | |

## Revendications

1. Substrat transparent, notamment en verre, muni d'un empilement de couches minces comportant une alternance de n couche(s) fonctionnelle(s) à propriétés de réflexion dans l'infrarouge et/ou dans le rayonnement solaire et de n+1 revêtements composés d'une ou plusieurs couches en matériau diélectrique, de manière à ce que chaque couche fonctionnelle soit disposée entre deux revêtements, ***caractérisé en ce qu*'au** moins l'une des couches de matériau diélectrique est à base d'un nitrure mixte de silicium et de zirconium, le rapport en pourcentage atomique Si/Zr étant compris entre 4,6 et 5 et son indice de réfraction étant compris entre 2,15 et 2,3.

2. Substrat selon la revendication 1, ***caractérisé en ce que*** l'indice de réfraction est compris entre 2,15 et 2,25.

3. Substrat selon la revendication 1, ***caractérisé en ce que*** l'empilement comporte une seule couche fonctionnelle disposée entre deux revêtements.

4. Substrat selon la revendication 1, ***caractérisé en ce que*** l'empilement comprend deux couches fonctionnelles alternées avec trois revêtements.

5. Substrat selon la revendication 1, ***caractérisé en ce que*** l'empilement comprend trois couches fonctionnelles alternées avec quatre revêtements.

6. Substrat selon l'une des revendications 1 à 5, ***caractérisé en ce que*** la couche fonctionnelle est à base d'argent, à base d'un mélange d'argent, à base d'or, de palladium.

7. Substrat selon les revendications 1 et 3, ***caractérisé en ce qu**'*il comporte :
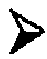 une première couche en matériau diélectrique, à haut indice, d'indice de réfraction compris entre 2,15 et 2,3 et d'une épaisseur géométrique compris entre 10 et 40 nm
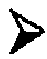 une première couche fonctionnelle
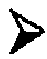 une deuxième couche en matériau diélectrique à haut indice, d'indice de réfraction compris entre 2,15 et 2,3 et d'une épaisseur géométrique compris entre 15 et 40 nm

8. Substrat selon les revendications 1 et 4 ***caractérisé en ce qu**'*il comporte :
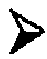 une première couche en matériau diélectrique, à haut indice, d'indice de réfraction compris entre 2,15 et 2,3 et d'une épaisseur géométrique compris entre 10 et 40 nm
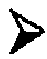 une première couche fonctionnelle
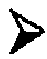 une deuxième couche en matériau diélectrique à haut indice, d'indice de réfraction compris entre 2,15 et 2.3 et d'une épaisseur géométrique compris entre 5 et 70nm.
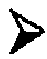 une seconde couche fonctionnelle
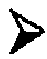 une troisième couche en matériau diélectrique à haut indice, d'indice de réfraction compris entre 2,15 et 2.3 et d'une épaisseur géométrique compris entre 10 et 40 nm.

9. Substrat selon les revendications 1 et 5, ***caractérisé en ce qu*'il** comporte :
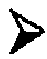 une première couche en matériau diélectrique, à haut indice, d'indice de réfraction compris entre 2,15 et 2,3 et d'une épaisseur géométrique compris entre 10 et 40nm
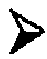 une première couche fonctionnelle
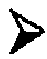 une deuxième couche en matériau diélectrique à haut indice, d'indice de réfraction compris entre 2,15 et 2,3 et d'une épaisseur géométrique compris entre 5 et 70nm
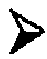 une seconde couche fonctionnelle
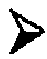 une troisième couche en matériau diélectrique à haut indice, d'indice de réfraction compris entre 2,15 et 2,3 et d'une épaisseur géométrique compris entre 5 et 70nm
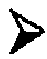 une troisième couche fonctionnelle
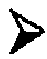 une quatrième couche en matériau diélectrique à haut indice, d'indice de réfraction compris entre 2,15 et 2,3 et d'une épaisseur géométrique compris entre 10 et 40nm.

10. Substrat selon l'une des revendications 1 à 9, ***caractérisé en ce que*** la(les) couche(s) absorbante(s) dans le visible positionnée au dessous d'au moins une couche fonctionnelle est (sont) choisie(s) à base d'un métal ou d'un alliage métalilque comme Ti, Nb, Zr ou NiCr, avec une épaisseur d'au moins 1 nm.

11. Substrat selon l'une des revendications 1 à 9, ***caractérisé en ce que*** la(les) couche(s) absorbante(s) dans le visible positionnée au dessus d'au moins une couché fonctionnelle est (sont) choisie(s) à base d'un métal ou d'un alliage métallique comme Ti, Nb, Zr ou NiCr, avec une épaisseur d'au moins 1 nm.

12. Substrat selon l'une des revendications 1 à 11, ***caractérisé en ce qu'*il** comporte une couche dite de couverture ou « overcoat » à base d'oxyde, éventuellement sous- ou sur-stoechiométrique en oxygène et/ou nitruré, tel que notamment un oxyde mixte d'étain et de zinc ou un oxyde de titane.

13. Substrat selon l'une des revendications 1 à 12, ***caractérisé en ce* qu'**il comporte une couche de couverture à base de DLC.

14. Substrat selon la revendication 13, ***caractérisé en ce que*** l'épaisseur de la couche de couverture est comprise entre 5 et 10 nm

15. Substrat selon l'une des revendications 1 à 14, ***caractérisé en ce que*** la ou chacune des couche(s) fonctionnelle(s) est au dessus d'un revêtement dont la dernière couche est à base d'oxyde de zinc ou d'un oxyde mixte de zinc et d'un autre métal.

16. Substrat selon l'une des revendications 1 à 14, ***caractérisé en ce que*** la ou chacune des couche(s) fonctionnelle(s) est en dessous d'un revêtement donc la première couche est à base d'oxyde zinc ou d'un oxyde mixte de zinc et d'un autre métal

17. Substrat selon l'une des revendications 15 ou 16, ***caractérisé en ce que*** la couché à base d'oxyde de zinc ou d'oxyde mixte de zinc et d'un autre métal est sous stoechiométrique en oxygène

18. Substrat selon l'une des revendications 1 à 17, **caractérisé en ce qu'**il est apte à subir un traitement thermiques, notamment un bombage, une trempe, un recuit.

19. Substrat selon l'une des revendications 1 à 18, ***caractérisé en ce que*** l'empilement est le suivant :
Si₃N₄ :Zr/ZnO/Ti/Ag/ZnO/ Si₃N₄ :Zr/ZnO/TI /Ag/ZnO/ Si₃N₄ :Zr ou Si₃N₄ :Zr/ZnO/Ag/NiCr/ZnO/Si₃N₄ :Zr
avec éventuellement de fines couches de métal partiellement ou totalement oxydées disposées sur l'une des faces au moins de chacune des couches d'argent.

20. Vitrage incorporant au moins un substrat selon l'une des revendications 1 à 19, ***caractérisé en qu***'il est sous forme de vitrage feuilleté, de vitrage asymétrique ou d'un vitrage multiple du typé double vitrage.

21. Application du vitrage selon la revendication 20 en tant que vitrage intérieur ou extérieur pour le bâtiment de contrôle solaire, bas émissif.

22. Application du vitrage selon la revendication 20 en tant que vitrage pour l'automobile, ce vitrage de contrôle solaire, bas émissif, pouvant être éventuellement chauffant.

## Patentansprüche

1. Transparentes Substrat, insbesondere aus Glas, mit einem Stapel von dünnen Schichten, die eine Wechselfolge von n funktionellen Schichten mit Infrarot- und/oder Sonnenstrahlungsreflexionseigenschaften und n+1 Beschichtungen aus einer oder mehreren Schichten aus dielektrischem Material umfassen, so dass jede funktionelle Schicht zwischen zwei Beschichtungen angeordnet ist, **dadurch gekennzeichnet, dass** mindestens eine der Schichten aus dielektrischem Material auf einem Mischnitrid von Silicium und Zirkonium mit einem Si/Zr-Atomprozentverhältnis zwischen 4,6 und 5 basiert, wobei ihr Brechungsindex zwischen 2,15 und 2,3 liegt.

2. Substrat nach Anspruch 1, **dadurch gekennzeichnet, dass** der Brechungsindex zwischen 2,15 und 2,25 liegt.

3. Substrat nach Anspruch 1, **dadurch gekennzeichnet, dass** der Stapel eine einzige funktionelle Schicht, die zwischen zwei Beschichtungen angeordnet ist, umfasst.

4. Substrat nach Anspruch 1, **dadurch gekennzeichnet, dass** der Stapel zwei funktionelle Schichten, die mit drei Beschichtungen alternieren, umfasst.

5. Substrat nach Anspruch 1, **dadurch gekennzeichnet, dass** der Stapel drei funktionelle Schichten, die mit vier Beschichtungen alternieren, umfasst.

6. Substrat nach einem der Ansprüche 1 bis 5, **dadurch gekennzeichnet, dass** die funktionelle Schicht auf Silber basiert, auf einer Mischung von Silber basiert oder auf Gold oder Palladium basiert.

7. Substrat nach den Ansprüchen 1 bis 3, **dadurch gekennzeichnet, dass** es Folgendes umfasst:
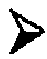 eine erste Schicht aus einen hohen Index aufweisendem dielektrischem Material mit einem Brechungsindex zwischen 2,15 und 2,3 und einer geometrischen Dicke zwischen 10 und 40 nm,
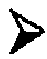 eine erste funktionelle Schicht,
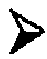 eine zweite Schicht aus einen hohen Index aufweisendem dielektrischem Material mit einem Brechungsindex zwischen 2,15 und 2,3 und einer geometrischen Dicke zwischen 15 und 40 nm.

8. Substrat nach den Ansprüchen 1 bis 4, **dadurch gekennzeichnet, dass** es Folgendes umfasst:
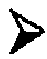 eine erste Schicht aus einen hohen Index aufweisendem dielektrischem Material mit einem Brechungsindex zwischen 2,15 und 2,3 und einer geometrischen Dicke zwischen 10 und 40 nm,
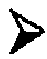 eine erste funktionelle Schicht,
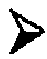 eine zweite Schicht aus einen hohen Index aufweisendem dielektrischem Material mit einem Brechungsindex zwischen 2,15 und 2,3 und einer geometrischen Dicke zwischen 5 und 70 nm,
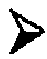 eine zweite funktionelle Schicht,
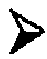 eine dritte Schicht aus einen hohen Index aufweisendem dielektrischem Material mit einem Brechungsindex zwischen 2,15 und 2,3 und einer geometrischen Dicke zwischen 10 und 40 nm.

9. Substrat nach den Ansprüchen 1 bis 5, **dadurch gekennzeichnet, dass** es Folgendes umfasst:
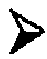 eine erste Schicht aus einen hohen Index aufweisendem dielektrischem Material mit einem Brechungsindex zwischen 2,15 und 2,3 und einer geometrischen Dicke zwischen 10 und 40 nm,
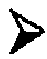 eine erste funktionelle Schicht,
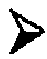 eine zweite Schicht aus einen hohen Index aufweisendem dielektrischem Material mit einem Brechungsindex zwischen 2,15 und 2,3 und einer geometrischen Dicke zwischen 5 und 70 nm,
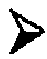 eine zweite funktionelle Schicht,
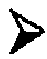 eine dritte Schicht aus einen hohen Index aufweisendem dielektrischem Material mit einem Brechungsindex zwischen 2,15 und 2,3 und einer geometrischen Dicke zwischen 5 und 70 nm,
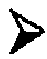 eine dritte funktionelle Schicht,
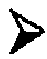 eine vierte Schicht aus einen hohen Index aufweisendem dielektrischem Material mit einem Brechungsindex zwischen 2,15 und 2,3 und einer geometrischen Dicke zwischen 10 und 40 nm.

10. Substrat nach einem der Ansprüche 1 bis 9, **dadurch gekennzeichnet, dass** die im Sichtbaren absorbierende Schicht bzw. die im Sichtbaren absorbierenden Schichten, die unter mindestens einer funktionellen Schicht liegt bzw. liegen, auf Basis eines Metalls oder einer Metalllegierung wie Ti, Nb, Zr oder NiCr mit einer Dicke von mindestens 1 nm ausgewählt ist bzw. sind.

11. Substrat nach einem der Ansprüche 1 bis 9, **dadurch gekennzeichnet, dass** die im Sichtbaren absorbierende Schicht bzw. die im Sichtbaren absorbierenden Schichten, die über mindestens einer funktionellen Schicht liegt bzw. liegen, auf Basis eines Metalls oder einer Metalllegierung wie Ti, Nb, Zr oder NiCr mit einer Dicke von mindestens 1 nm ausgewählt ist bzw. sind.

12. Substrat nach einem der Ansprüche 1 bis 11, **dadurch gekennzeichnet, dass** es eine als Deckschicht oder "Overcoat" bezeichnete Schicht auf Basis von Oxid, das gegebenenfalls bezüglich Sauerstoff unter- oder überstöchiometrisch und/oder nitriert ist, wie insbesondere einem Mischoxid von Zinn und Zink oder einem Titanoxid, umfasst.

13. Substrat nach einem der Ansprüche 1 bis 12, **dadurch gekennzeichnet, dass** es eine Deckschicht auf Basis von DLC umfasst.

14. Substrat nach Anspruch 13, **dadurch gekennzeichnet, dass** die Dicke der Deckschicht zwischen 5 und 10 nm liegt.

15. Substrat nach einem der Ansprüche 1 bis 14, **dadurch gekennzeichnet, dass** die funktionelle Schicht bzw. jede der funktionellen Schichten sich über einer Beschichtung, deren letzte Schicht auf Zinkoxid oder einem Mischoxid von Zink und einem anderen Metall basiert, befindet bzw. befinden.

16. Substrat nach einem der Ansprüche 1 bis 14, **dadurch gekennzeichnet, dass** die funktionelle Schicht bzw. jede der funktionellen Schichten sich unter einer Beschichtung, deren erste Schicht auf Zinkoxid oder einem Mischoxid von Zink und einem anderen Metall basiert, befindet bzw. befinden.

17. Substrat nach Anspruch 15 oder 16, **dadurch gekennzeichnet, dass** die Schicht auf Basis von Zinkoxid oder einem Mischoxid von Zink und einem anderen Metall bezüglich Sauerstoff unterstöchiometrisch ist.

18. Substrat nach einem der Ansprüche 1 bis 17, **dadurch gekennzeichnet, dass** es dazu geeignet ist, eine Wärmebehandlung, insbesondere eine Biegung, eine Härtung oder eine Temperung, zu durchlaufen.

19. Substrat nach einem der Ansprüche 1 bis 18, **dadurch gekennzeichnet, dass** es sich bei dem Stapel um den folgenden handelt:
Si₃N₄:Zr/ZnO/Ti/Ag/ZnO/Si₃N₄:Zr/ZnO/Ti/Ag/ZnO/Si₃N₄: Zr oder Si₃N₄:Zr/ZnO/Ag/NiCr/ZnO/Si₃N₄:Zr,
gegebenenfalls mit teilweise oder vollständig oxidierten dünnen Metallschichten, die auf mindestens einer der Seiten jeder der Silberschichten angeordnet sind.

20. Verglasung mit mindestens einem Substrat nach einem der Ansprüche 1 bis 19, **dadurch gekennzeichnet, dass** sie in Form einer Verbundverglasung, einer asymmetrischen Verglasung oder einer Mehrfachverglasung vom Doppelverglasungstyp vorliegt.

21. Anwendung der Verglasung nach Anspruch 20 als emissionsarme Sonnenschutzinnenverglasung oder -außenverglasung für Gebäude.

22. Anwendung der Verglasung nach Anspruch 20 als Verglasung für Autos, wobei diese emissionsarme Sonnenschutzverglasung gegebenenfalls erhitzt werden kann.

## Claims

1. A transparent substrate, especially glass substrate, provided with a thin-film multilayer comprising an alternation of n functional layers having reflection properties in the infrared and/or in solar radiation and n+1 coatings composed of one or more layers of dielectric material, in such a way that each functional layer is placed between two coatings, **characterized in that** at least one of the layers of dielectric material is based on a mixed silicon zirconium nitride, the Si/Zr atomic percentage ratio being between 4.6 and 5 and its refractive index being between 2.15 and 2.3.

2. The substrate as claimed in claim 1, **characterized in that** refractive index is between 2.15 and 2.25.

3. The substrate as claimed in claim 1, **characterized in that** the multilayer comprises a single functional layer placed between two coatings.

4. The substrate as claimed in claim 1, **characterized in that** the multilayer comprises two functional layers alternating with three coatings.

5. The substrate as claimed in claim 1, **characterized in that** the multilayer comprises three functional layers alternating with four coatings.

6. The substrate as claimed in one of claims 1 to 5, **characterized in that** the functional layer is based on silver, based on a silver mixture or based on gold or palladium.

7. The substrate as claimed in claims 1 and 3, **characterized in that** it comprises:
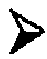 a first high-index dielectric layer having a refractive index of between 2.15 and 2.3 and a geometrical thickness of between 10 and 40 nm;
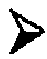 a first functional layer; and
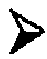 a second high-index dielectric layer having a refractive index of between 2.15 and 2.3 and a geometrical thickness of between 15 and 40 nm.

8. The substrate as claimed in claims 1 and 4, **characterized in that** it comprises:
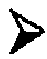 a first high-index dielectric layer having a refractive index of between 2.15 and 2.3 and a geometrical thickness of between 10 and 40 nm;
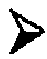 a first functional layer;
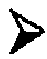 a second high-index dielectric material having a refractive index of between 2.15 and 2.3 and a geometrical thickness of between 5 and 70 nm;
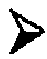 a second functional layer; and
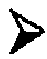 a third high-index dielectric layer having a refractive index of between 2.15 and 2.3 and a geometrical thickness of between 10 and 40 nm.

9. The substrate as claimed in claims 1 and 5, **characterized in that** it comprises:
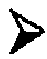 a first high-index dielectric layer having a refractive index of between 2.15 and 2.3 and a geometrical thickness of between 10 and 40 nm;
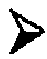 a first functional layer;
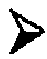 a second high-index dielectric layer having a refractive index of between 2.15 and 2.3 and a geometrical thickness of between 5 and 70 nm;
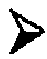 a second functional layer;
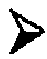 a third high-index dielectric layer having a refractive index of between 2.15 and 2.3 and a geometrical thickness of between 5 and 70 nm;
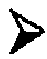 a third functional layer; and
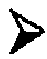 a fourth high-index dielectric layer having a refractive index of between 2.15 and 2.3 and a geometrical thickness of between 10 and 40 nm.

10. The substrate as claimed in one of claims 1 to 9, **characterized in that** the layer(s) absorbent in the visible, positioned beneath at least one functional layer, is (are) chosen to be based on a metal or a metal alloy, such as Ti, Nb, Zr or NiCr, with a thickness of at least 1 nm.

11. The substrate as claimed in one of claims 1 to 9, **characterized in that** the layer(s) absorbent in the visible, positioned on top of at least one functional layer, is (are) chosen to be based on a metal or a metal alloy, such as Ti, Nb, Zr or NiCr, with a thickness of at least 1 nm.

12. The substrate as claimed in one of claims 1 to 11, **characterized in that** it includes what is called a cover layer or "overcoat" based on an oxide, possibly an oxide substoichiometric or superstoichiometric in oxygen, and/or nitrided, such as especially a mixed tin zinc oxide or a titanium oxide.

13. The substrate as claimed in one of claims 1 to 12, **characterized in that** it includes a DLC-based overcoat.

14. The substrate as claimed in claim 13, **characterized in that** the thickness of the overcoat is between 5 and 10 nm.

15. The substrate as claimed in one of claims 1 to 14, **characterized in that** the or each of the functional layers is on top of a multilayer coating whose last layer is based on zinc oxide or on a mixed oxide of zinc and another metal.

16. The substrate as claimed in one of claims 1 to 14, **characterized in that** the or each of the functional layers is beneath a multilayer coating whose first layer is based on zinc oxide or on a mixed oxide of zinc and another metal.

17. The substrate as claimed in either of claims 15 and 16, **characterized in that** the layer based on zinc oxide or on a mixed oxide of zinc and another metal is substoichiometric in oxygen.

18. The substrate as claimed in one of claims 1 to 17, **characterized in that** it is capable of undergoing a heat treatment, especially a bending, toughening or annealing operation.

19. The substrate as claimed in one of claims 1 to 18, **characterized in that** the multilayer is as follows:
Zr:Si₃N₄/ZnO/Ti/Ag/ZnO/Zr:Si₃N₄/ZnO/Ti/Ag/ZnO/ Zr:Si₃N₄ or Zr:Si₃N₄/ZnO/Ag/NiCr/ZnO/Zr:Si₃N₄
optionally with thin layers of partially or completely oxidized metal placed on one of the faces of at least each of the silver layers.

20. Glazing incorporating at least one substrate as claimed in one of claims 1 to 19, **characterized in that** it is in the form of laminated glazing, a symmetrical glazing or multiple glazing of the double glazing type.

21. The application of the glazing as claimed in claim 20 as interior or exterior, solar-control or low-emissivity glazing for buildings.

22. The application of the glazing as claimed in claim 21 as automotive glazing, it being possible for this solar-protection, low-emissivity glazing to be, optionally, a heated window.
